# EUROPEAN PATENT APPLICATION

(11) **EP 3 608 863 A1**
(43) Date of publication of application: **12.02.2020**
(21) Application number: 18781435.5
(22) Date of filing: 31.03.2018
(51) Int. Cl.: G06Q 30/02

(54) **ADVERTISEMENT SYSTEM, ADVERTISEMENT SYSTEM PROGRAM, AND ADVERTISEMENT METHOD**

(30) Priority: 03.04.2017 JP 2017073550
(71) Applicant: Diogenes Limited Liability Company, Kyoto-shi, Kyoto 6060045 (JP)
(72) Inventor: IPPITSU, Yoshimi, Kyoto-shi, Kyoto 602-8061 (JP)
(74) Representative: TBK
(86) International application number: PCT/JP2018/014019
(87) International publication number: WO 2018/186319

(57) **Abstract**

There are provided an advertisement system, an advertisement system program, or an advertisement method which generate facility protection cost of a cultural facility, a public facility, or a transportation facility. There is provided an advertisement system 100. A server 200 includes a counting unit 260 that counts the number of times a second terminal 400 accesses the server or advertisement information, and a protection cost calculation unit 270 that calculates the amount of payment that at least a part of advertisement rates paid by an advertiser is paid as protection cost of a cultural facility by a user of a first terminal 300 to a cultural facility different from the user of the first terminal 300 according to the number of times of the accesses counted by the counting unit 260. The advertisement information is displayed on a VR image which is cultural facility information displayed on a display unit 430 of the second terminal through a communication unit 210.

## Description

### Technical Field

The present invention relates to an advertisement system, an advertisement system program, and an advertisement method.

### Background Art

Conventionally, Internet services using wireless communication such as free Wi-Fi have not been sufficiently provided in cultural facilities such as zoos and botanical gardens.

However, since providing free Wi-Fi services costs a lot, there is a problem in terms of cost.

Meanwhile, there is also a problem that the zoos and botanical gardens have to manage to raise the costs for maintaining the facilities.

Patent Literature 1 is an online map advertisement system for selecting content items in a map space. Patent Literature 1 describes that an advertisement is published in a blank portion of the map space on a web. However, in the invention according to Patent Literature 1, it is difficult to solve the above-described problems. Citation List

### Patent Literature

Patent Literature 1: JP 2015-092344 A

### Summary of Invention

### Technical Problem

At the cultural facilities such as zoos and botanical gardens, the advertisement is merely published on a wall surface of the facility, or the advertisement is merely published on a HP of the facility.

Such advertisement rates are not sufficient as costs for maintaining the cultural facilities such as zoos and botanical gardens.

It is also difficult to provide the free Wi-Fi services in terms of cost.

Meanwhile, in public facilities such as parks, in order to prevent accidents caused by playground equipment, cleaning and maintenance are constantly required, and such cleaning and maintenance costs are required to be generated.

In the public facilities such as parks and public toilets in the city, cleaning is required, and such cleaning costs are required to be generated.

Meanwhile, in transportation facilities such as airports, trains, and buses, there are costs for cleaning the airport and the station including the toilet, and the costs are required to be generated.

However, particularly in the public facilities, it is extremely difficult to generate cleaning costs and maintenance costs.

Meanwhile, in the public facilities such as parks and the transportation facilities such as stations, there are places where the free Wi-Fi services are provided, but there are not much effect such as advertisements.

In the public facilities such as parks and the transportation facilities such as stations, there are many places where the advertisement is merely published on the wall surface of the facility or the advertisement is merely published on the HP of the facility.

Meanwhile, it is possible to collect donations on the HP of the cultural facility, the public facility, or the transportation facility. However, although there are persons who wish to maintain the cultural facility, many persons may not donate money.

Additionally, in order to provide the donations to the cultural facilities, there is a problem that the persons need to transfer to a predetermined bank account, and the procedure is troublesome.

Thus, the donations are not sufficient as for the maintenance costs of the cultural facilities, the public facilities, or the transportation facilities.

Meanwhile, many foreign tourists use free Wi-Fi. However, these tourists cannot connect to the Internet and cannot use terminals such as smartphones and tablet computers on a site of the public facility or the transportation facility.

An object of the present invention is to provide an advertisement system that displays advertisement information on a terminal in association with cultural facility information.

Another object of the present invention is to provide an advertisement system that displays advertisement information on a terminal in association with public facility information.

Still another object of the present invention is to provide an advertisement system that displays advertisement information on a terminal in association with transportation facility information.

Still another object of the present invention is to provide an advertisement system, an advertisement system program, or an advertisement method for generating facility protection cost for a cultural facility, a public facility, or a transportation facility.

Still another object of the present invention is to provide an advertisement system that generates cleaning and maintenance costs.

### Solution to Problem

An advertisement system according to a first aspect of the present invention is an advertisement system that includes at least a first terminal and a second terminal which are terminals, and a server which is able to communicate with the first terminal and the second terminal.

The server includes
a communication unit that is able to communicate with the first terminal and the second terminal,
a facility information unit that displays cultural facility information including a 360° VR image on a display unit of the second terminal,
an advertisement information unit that displays advertisement information on the display unit of the second terminal,
a counting unit that counts the number of times the second terminal accesses the server or the advertisement information, and
a protection cost calculation unit that calculates the amount of payment that at least a part of advertisement rates paid by an advertiser is paid as protection cost of a cultural facility by a user of the first terminal to a cultural facility different from the user of the first terminal according to the number of times of the accesses counted by the counting unit, and
the advertisement information is displayed on the VR image which is the cultural facility information displayed on the display unit of the second terminal through the communication unit.

The "cultural facility information" refers to information related to cultural facilities such as zoos, botanical gardens, aquariums, art galleries, museums, libraries, interpretive centers, memorial houses, theaters, music halls, and planetariums. The cultural facility information includes cultural facility-related images (cultural facility-related image data) and information related to the images.

For example, when the cultural facility is the zoo, the "cultural facility information" includes not only information on the zoo itself but also information on animals. When the cultural facility is the botanical garden, the "cultural facility information" includes not only information on the botanical garden itself but also information on plants.

When the cultural facility is the aquarium, the "cultural facility information" includes information on fishes, dolphins, and whales. When the cultural facility is the art gallery, the museum, the interpretive center, or the memorial house, the "cultural facility information" includes not only information on buildings but also information on exhibits.

When the cultural facility is the theater or the music hall, the cultural facility information includes not only the information on buildings but also information on contents such as plays, operas, musicals, and music.

In addition, the cultural facility information also includes contents such as the origin, history, and constitution of the cultural facilities such as zoos and botanical gardens. The cultural facility information also includes video and text information.

The "cultural facility" is a general term for a facility used for cultural and artistic activities, and is a concept including zoos, botanical gardens, aquariums, art galleries, museums, libraries, interpretive centers, memorial houses, theaters, music halls, and planetariums.

An advertisement system according to a second aspect of the present invention is an advertisement system that includes at least a first terminal and a second terminal which are terminals, and a server which is able to communicate with the first terminal and the second terminal.

The server includes
a communication unit that is able to communicate with the first terminal and the second terminal,
a facility information unit that displays public facility information including a 360° VR image on a display unit of the second terminal,
an advertisement information unit that displays advertisement information on the display unit of the second terminal,
a counting unit that counts the number of times the second terminal accesses the server or the advertisement information, and
a protection cost calculation unit that calculates the amount of payment that at least a part of advertisement rates paid by an advertiser is paid as protection cost of a public facility by a user of the first terminal to a public facility different from the user of the first terminal according to the number of times of the accesses counted by the counting unit, and
the advertisement information is displayed on the VR image which is the public facility information displayed on the display unit of the second terminal through the communication unit.

The "public facility information" refers to information related to public facilities such as roads, parks, sewers, schools, libraries, sand beaches, and hospitals. The public facility information includes public facility-related images (public facility-related image data) and information related to the images.

The "public facility" refers to a facility supplied by public works such as roads, parks, sewers, schools, libraries, sand beaches, and hospitals.

An advertisement system according to a third aspect of the present invention is an advertisement system that includes at least a first terminal and a second terminal which are terminals, and a server which is able to communicate with the first terminal and the second terminal.

The server includes
a communication unit that is able to communicate with the first terminal and the second terminal,
a facility information unit that displays transportation facility information including a 360° VR image on a display unit of the second terminal,
an advertisement information unit that displays advertisement information on the display unit of the second terminal,
a counting unit that counts the number of times the second terminal accesses the server or the advertisement information, and
a protection cost calculation unit that calculates the amount of payment that at least a part of advertisement rates paid by an advertiser is paid as protection cost of a transportation facility by a user of the first terminal to a transportation facility different from the user of the first terminal according to the number of times of the accesses counted by the counting unit, and
the advertisement information is displayed on the VR image which is the transportation facility information displayed on the display unit of the second terminal through the communication unit.

The "transportation facility information" refers to information related to transportation facilities such as roads, railways, buses, ports, and airports. The transportation facility information includes transportation facility-related images (transportation facility-related image data) and information related to the images.

For example, when the transportation facility is the railway, the "transportation facility information" includes information on a railway station. The "transportation facility information" includes information on trains, buses, ships, and airplanes.

The "transportation facility" refers to a facility for moving persons and objects, such as roads, railways, buses, harbors, and airports.

The advertisement information includes not only text information but also an advertisement information image and information related to the image. The advertisement rates caused by displaying the advertisement information can be used for cultural facility maintenance, public facility maintenance or transportation facility maintenance.

That is, since at least a part of the advertisement rates obtained from the advertiser is paid to the cultural facility, the public facility, or the transportation facility, by the user of the first terminal, as the facility protection cost, the cultural facility, the public facility, or the transportation facility can be protected by the advertisement rates.

Specifically, the number of times the second terminal accesses the server or the advertisement information (such as a website) is counted by the counting unit, and the user of the first terminal pays, as the cultural facility protection cost, the public facility protection cost, or the transportation facility protection cost, at least a part of the advertisement rates to the cultural facility, the public facility, or the transportation facility according to the number of times of the accesses counted.

The user of the first terminal includes not only an actual user of the first terminal but also a person who can be regarded as the user of the first terminal. For example, a third party requested by the user of the first terminal may receive the advertisement rates from the advertiser, and may pay at least a part of the advertisement rates as the facility protection cost to the cultural facility.

In the present invention, the advertisement information is displayed on the display unit of the terminal together with information on at least any of the cultural facility information, the public facility information, and the transportation facility information.

Thus, for example, since the cultural facility information, the public facility information, or the transportation facility information can be obtained and the advertisement information (for example, store information) near the place (area) where these facilities are present can also be obtained, there is an advantage that the user of the terminal can use these information in sightseeing.

For example, since the advertisement information is displayed on the display unit of the terminal together with the cultural facility information, the public facility information, or the transportation facility information, there is an advantage that the advertiser achieves branding of stores and products which are advertisement targets.

In addition, the maintenance costs are paid to the cultural facility such as the zoo or the botanical garden, and the public facility, only by publishing the advertisement, and thus, there is an advantage that a company which is the advertiser fulfills corporate social responsibility (CSR).

There is an advantage that advertising revenue can be allocated to the maintenance costs of the cultural facility, for the cultural facility such as the zoo or the botanical garden. It is possible to repair the cultural facility with the advertising revenue in the cultural facility, and thus, it is possible to maintain the cultural facility.

At the cultural facilities such as the zoo and the aquarium, feed costs of the animals and fishes are extremely high, and it is also necessary to cover salaries for caretakers. In such cultural facilities, there is an advantage that these costs can be covered by the advertisement rates.

The cultural facilities such as the zoo and the botanical garden can provide new services and reduce admission fees and entrance fees by obtaining the advertisement rates. Since at least a part of the advertisement rates obtained from the advertiser is paid, as the facility protection cost, by the user of the first terminal to the cultural facility, the public facility, or the transportation facility, the cultural facility, the public facility, or the transportation facility does not have a burden of cost such as capital investment, and thus, there is an advantage that cost risk can be eliminated.

The advertisement rate generated when the advertisement information is displayed on the terminal together with the cultural facility information is allocated to the cultural facility maintenance cost, and thus, the user of the terminal can support the maintenance of the cultural facility of a tourist destination by viewing the advertisement displayed on the terminal, and can contribute to society.

The advertisement information is displayed on the terminal together with the cultural facility information, and thus, companies and stores near a place where the cultural facility is present can not only advertise to the user of the terminal, but also allocate the advertisement rate to the cultural facility maintenance cost. Thus, the companies and stores can contribute to the community, contribute to the society, and do CSR activities such as the maintenance of the cultural facility.

For example, at the public facility such as the park, when the public facility is the park, maintenance costs of playground equipment, management costs of lawn and sand pool, cleaning costs of toilets, cleaning costs of a site, maintenance costs of buildings, and salaries for cleaning staffs are required.

Since at least a part of the advertisement rates obtained by the user of the first terminal is paid, as the public facility protection cost, by the user of the first terminal to the public facility, there is an advantage that the advertisement rates are allocated to the public facility protection cost in the public facility.

The public facility such as the park can provide new services or introduce new playground equipment by obtaining the advertisement rates.

The advertisement rates generated when the advertisement information is displayed on the terminal together with the public facility information are allocated to the public facility maintenance cost, and thus, the user of the terminal can support the maintenance of the public facility by viewing the advertisement displayed on the terminal, and can contribute to society.

The advertisement information is displayed on the terminal together with the public facility information, and thus, companies and stores near a place where the public facility is present can not only advertise to the user of the terminal, but also allocate the advertisement rates to the public facility maintenance cost. Thus, the companies and stores can contribute to the community, contribute to the society, and do CSR activities such as the maintenance of the public facility.

For example, at the transportation facilities such as the railway, the bus, and the airport, in the case of the railway such as a municipal subway, costs such as cleaning costs in the station, cleaning costs of toilets in the station, guidance service costs, and salaries for cleaning staffs are required.

In such transportation facilities, there is an advantage that these costs can be covered by the advertisement rates.

In addition, the obtained advertisement rates can be used for improving hygiene in the transportation facility such as the railway. That is, the transportation facility such as the railway can allocate the advertisement rates to the cleaning of the toilets, and the like.

The advertisement rates generated when the advertisement information is displayed on the terminal together with the railway facility information are allocated to the cost for improving the hygiene of the railway facility, and thus, the user of the terminal can support the improvement of the hygiene of the railway facility by viewing the advertisement displayed on the terminal, and can contribute to society.

The advertisement information is displayed on the terminal together with the transportation facility information, and thus, companies and stores near a place where the transportation facility is present can not only advertise to the user of the terminal, but also allocate the advertisement rates to the cost for the improvement of the hygiene of the transportation facility. Thus, the companies and stores can contribute to the community, contribute to the society, and do CSR activities.

Companies in need of what to do in the community contribution, the society contribution, and the CSR activities receive help from the aforementioned countermeasures.

A large company that needs to set a CSR budget can allocate CSR cost to the advertisement rates by doing the CSR activities by using the present invention. Therefore, such a large company has an advantage that the advertisement rate can be reduced.

The advertisement rates are allocated to the cultural facility maintenance cost, and thus, the cultural facility is protected. Thus, there is an advantage that the local economy is revitalized for the national or local public organization.

An area where the cultural facility such as the zoo or the botanical garden is present, an area where the public facility such as the park is present, or an area where the transportation facility is present is revitalized, and thus, an attention to the local area by company such as the large company is increased. Accordingly, the company such as a large company invests in the area where the cultural facility is present, and thus, there is an effect that the regional economy is revitalized.

An advertisement system according to a fourth aspect of the present invention is the advertisement system according to the first aspect, the second aspect, or the third aspect. In the advertisement system, the protection cost calculation unit calculates advertisement rates according to the number of times of the accesses counted by the counting unit, and calculates the amount of payment to be paid as the protection cost based on the advertisement rates.

That is, the facility protection cost is calculated according to the number of times of the accesses counted by the counting unit, but in this calculation, the advertisement rates are calculated according to the number of times of the accesses, and the facility protection cost is calculated based on the advertisement rates.

Specifically, the advertisement rates are calculated according to the number of accesses to the server or the advertisement information, and the advertiser pays the calculated advertisement rates to the user of the first terminal. The facility protection cost is calculated from the advertisement rates, and the user of the first terminal pays the facility protection cost to the cultural facility, the public facility or the transportation facility. That is, the facility protection cost is calculated according to the number of accesses to the server or advertisement information.

An advertisement system according to a fifth aspect of the present invention is the advertisement system according to the first aspect to the fourth aspect. The advertisement system further includes a coupon issuance unit that issues a coupon capable of being used in a registered store on the display unit of the second terminal through the communication unit.

The coupon issuance unit includes
an advertisement video unit that plays an advertisement video on the display unit of the second terminal, and
a coupon selection and issuance unit that displays a coupon selection screen on the display unit of the second terminal after the advertisement video is played for a predetermined time or ended.

The coupon is displayed on the display unit of the second display by selecting the coupon from the coupon selection screen displayed by the coupon selection and issuance unit.

The user of the second terminal views the advertisement video, and thus, an advertisement effect becomes more effective.

Since the user of the second terminal can obtain a discount coupon or an additional service coupon for a registered store by merely viewing the advertisement video, the number of accesses to the advertisement video is also improved.

The user of the second terminal can contribute to the protection of the facility of the cultural facility, the public facility, or the transportation facility by viewing the advertisement video.

It is preferable that an advertisement system according to the present invention include at least any of a map information unit that displays map information on a display unit of the terminal via the communication unit,
a tourism information unit that displays tourism information on the display unit of the terminal,
a transportation information unit that displays transportation information on the display unit of the terminal,
an emergency information unit that displays emergency information on the display unit of the terminal, and
a guidance information unit that displays guidance information to a destination on the display unit of the terminal. Weather information may be displayed on the display unit of the terminal.

With such a configuration, the tourism information, the transportation information, the emergency information, or the guidance information is displayed together with the cultural facility information, the public facility information, or the transportation facility information on the display unit of the terminal, the user of the terminal easily uses these information.

Specifically, the tourism information near the zoo and the botanical garden where the cultural facility is present is known. The transportation information such as which transportation is used to go to the zoo or the botanical garden at which the cultural facility is present is known. The emergency information such as evacuation information at the time of disaster is known. The guidance information for guiding to the destination is known. The same applies to the public facilities and the transportation facilities.

The "tourism information" refers to sightseeing spot information, store information, merchandise information, hotel information, inn information, guest house information, event information, and experience information of areas or prefectures where the cultural facilities, the public facilities, or the transportation facilities are present.

The "event information" refers to various events that take place at a certain period of time. For example, in the case of the aquarium, there is an event such as a dolphin show.

For example, the "experience information" refers to various experience information such as feeding experience and animal interaction experience in the zoo.

The "transportation information" refers to access information such as which bus or train to get to the destination, traffic congestion information, accident information, and traffic regulation information.

The "emergency information" refers to emergency earthquake warnings, tsunami warnings, and special warnings related to weather.

The "guidance information" is guidance information to a destination using a navigation system.

A program of an advertisement system according to a sixth aspect of the present invention is a program of an advertisement system that includes at least a first terminal and a second terminal which are terminals, and a server which is able to communicate with the first terminal and the second terminal.

The server performs
a communication process of being able to communicate with the first terminal and the second terminal,
a facility information display process of displaying cultural facility information including a 360° VR image on a display unit of the second terminal,
an advertisement information display process of displaying advertisement information on the display unit of the second terminal,
a counting process of counting the number of times the second terminal accesses the server or the advertisement information, and
a protection cost calculation process of calculating the amount of payment that at least a part of advertisement rates paid by an advertiser is paid as protection cost of a cultural facility by a user of the first terminal to a cultural facility different from the user of the first terminal according to the number of times of the accesses counted by the counting process, and
the advertisement information is displayed on the VR image which is the cultural facility information displayed on the display unit of the second terminal through the communication process.

A program of an advertisement system according to a seventh aspect of the present invention is a program of an advertisement system that includes at least a first terminal and a second terminal which are terminals, and a server which is able to communicate with the first terminal and the second terminal.

The server performs
a communication process of being able to communicate with the first terminal and the second terminal,
a facility information display process of displaying public facility information including a 360° VR image on a display unit of the second terminal,
an advertisement information display process of displaying advertisement information on the display unit of the second terminal,
a counting process of counting the number of times the second terminal accesses the server or the advertisement information, and
a protection cost calculation process of calculating the amount of payment that at least a part of advertisement rates paid by an advertiser is paid as protection cost of a public facility by a user of the first terminal to a public facility different from the user of the first terminal according to the number of times of the accesses counted by the counting process, and
the advertisement information is displayed on the VR image which is the public facility information displayed on the display unit of the second terminal through the communication process.

A program of an advertisement system according to an eighth aspect of the present invention is a program of an advertisement system that includes at least a first terminal and a second terminal which are terminals, and a server which is able to communicate with the first terminal and the second terminal.

The server performs
a communication process of being able to communicate with the first terminal and the second terminal,
a facility information display process of displaying transportation facility information including a 360° VR image on a display unit of the second terminal,
an advertisement information display process of displaying advertisement information on the display unit of the second terminal,
a counting process of counting the number of times the second terminal accesses the server or the advertisement information, and
a protection cost calculation process of calculating the amount of payment that at least a part of advertisement rates paid by an advertiser is paid as protection cost of a transportation facility by a user of the first terminal to a transportation facility different from the user of the first terminal according to the number of times of the accesses counted by the counting process, and
the advertisement information is displayed on the VR image which is the transportation facility information displayed on the display unit of the second terminal through the communication process.

The number of times the second terminal accesses the server or the advertisement information (such as a website) is counted in the counting process, and the user of the first terminal pays, as the cultural facility protection cost, the public facility protection cost, or the transportation facility protection cost, at least a part of the advertisement rates to the cultural facility, the public facility, or the transportation facility according to the number of times of the accesses counted.

The user of the first terminal includes not only an actual user of the first terminal but also a person who can be regarded as the user of the first terminal. For example, a third party requested by the user of the first terminal may receive the advertisement rates from the advertiser, and may pay at least a part of the advertisement rates as the facility protection cost to the cultural facility.

For example, since the advertisement information is displayed on the display unit of the terminal together with the cultural facility information, the user of the terminal can obtain the cultural facility information and can also obtain the advertisement information (for example, store information) near the place (area) where the cultural facility is present, there is an advantage that the user can use these information in sightseeing.

For example, since the advertisement information is displayed on the display unit of the terminal together with the cultural facility information, there is an advantage that the advertiser achieves branding of stores and products which are advertisement targets.

The maintenance costs are paid to the cultural facilities such as the zoo and the botanical garden by merely publishing the advertisement, and thus, there is an advantage that the company which is the advertiser fulfills the CSR.

There is an advantage that advertising revenue can be allocated to the maintenance costs of the cultural facility, for the cultural facility such as the zoo or the botanical garden. It is possible to repair the cultural facility with the advertising revenue in the cultural facility, and thus, it is possible to maintain the cultural facility.

At the cultural facilities such as the zoo and the aquarium, feed costs of the animals and fishes are extremely high, and it is also necessary to cover salaries for caretakers. In such cultural facilities, there is an advantage that these costs can be covered by the advertisement rates.

The cultural facilities such as the zoo and the botanical garden can provide new services and reduce admission fees and entrance fees by obtaining the advertisement rates.

The advertisement rates generated when the advertisement information is displayed on the terminal together with the cultural facility information are allocated to the cultural facility maintenance cost, and thus, the user of the terminal such as the user can support the maintenance of the cultural facility of a tourist destination by viewing the advertisement displayed on the terminal, and can contribute to society.

The advertisement information is displayed on the terminal together with the cultural facility information, and thus, companies and stores near a place where the cultural facility is provided can not only advertise to the user of the terminal such as the user, but also allocate the advertisement rates to the cultural facility maintenance cost. Thus, the companies and stores can contribute to the community, contribute to the society, and do CSR activities.

For example, at the public facility such as the park, when the public facility is the park, maintenance costs of playground equipment, management costs of lawn and sand pool, cleaning costs of toilets, cleaning costs of a site, maintenance costs of buildings, and salaries for cleaning staffs are required.

In such public facilities, there is an advantage that these costs can be covered by the advertisement rates.

The public facility such as the park can provide new services or introduce new playground equipment by obtaining the advertisement rates.

The advertisement rates generated when the advertisement information is displayed on the terminal together with the public facility information are allocated to the public facility maintenance cost, and thus, the user of the terminal such as the user can support the maintenance of the public facility by viewing the advertisement displayed on the terminal, and can contribute to society.

The advertisement information is displayed on the terminal together with the public facility information, and thus, companies and stores near a place where the public facility is provided can not only advertise to the user of the terminal such as the user, but also allocate the advertisement rates to the public facility maintenance cost. Thus, the companies and stores can contribute to the community, contribute to the society, and do CSR activities.

For example, at the transportation facilities such as the railway, the bus, and the airport, in the case of the railway such as a municipal subway, costs such as cleaning costs in the station, cleaning costs of toilets in the station, guidance service costs, and salaries for cleaning staffs are required.

In such transportation facilities, there is an advantage that these costs can be covered by the advertisement rates.

In addition, the obtained advertisement rates can be used for improving hygiene in the transportation facility such as the railway. That is, the transportation facility such as the railway can allocate the advertisement rates to the cleaning of the toilets, and the like.

The advertisement rates generated when the advertisement information is displayed on the terminal together with the railway facility information are allocated to the cost for improving the hygiene of the railway facility, and thus, the user of the terminal which is the user of the railway can support the improvement of the hygiene of the railway facility by viewing the advertisement displayed on the terminal, and can contribute to society.

The advertisement information is displayed on the terminal together with the transportation facility information, and thus, companies and stores near a place where the transportation facility is provided can not only advertise to the user of the terminal such as the user, but also allocate the advertisement rates to the cost for the improvement of the hygiene of the transportation facility. Thus, the companies and stores can contribute to the community, contribute to the society, and do CSR activities.

Companies in need of what to do in the community contribution, the society contribution, and the CSR activities receive help from the aforementioned countermeasures.

A large company that needs to set a CSR budget can allocate CSR cost to the advertisement rates by doing the CSR activities by using the present invention. Therefore, such a large company has an advantage that the advertisement rate can be reduced.

The advertisement rates are allocated to the cultural facility maintenance cost, and thus, the cultural facility is protected. Thus, there is an advantage that the local economy is revitalized for the national or local public organization.

An area where the cultural facility such as the zoo or the botanical garden is present is revitalized, and thus, an attention to the local area by company such as the large company is increased. Accordingly, the company such as a large company invests in the area where the cultural facility is present, and thus, there is an effect that the regional economy is revitalized.

It is preferable that the program of the advertisement system according to the present invention be a program including at least any of a map information process of displaying map information on the display unit of the terminal in the communication process,
a tourism information display process of displaying tourism information on the display unit of the terminal,
a transportation information display process of displaying transportation information on the display unit of the terminal,
an emergency information display process of displaying emergency information on the display unit of the terminal, and
a guidance information display process of displaying guidance information to a destination on the display unit of the terminal.

With such a configuration, the tourism information, the transportation information, the emergency information, or the guidance information is displayed together with the cultural facility information, the public facility information, or the transportation facility information on the display unit of the terminal, the user of the terminal easily uses these information.

Specifically, the tourism information near the zoo and the botanical garden where the cultural facility is present is known. The transportation information such as which transportation is used to go to the zoo or the botanical garden at which the cultural facility is present is known. The emergency information such as evacuation information at the time of disaster is known. The guidance information for guiding to the destination is known. The same applies to public facilities and transportation facilities.

An advertisement method according to a ninth aspect of the present invention is an advertisement method that includes at least a first terminal and a second terminal, and a server which is able to communicate with the first terminal and the second terminal.

The method includes
a facility information display step of displaying cultural facility information including a 360° VR image on a display unit of the second terminal,
an advertisement information display step of displaying advertisement information on the VR image which is the cultural facility information displayed on the display unit of the second terminal,
a counting step of counting the number of times the second terminal accesses the server or the advertisement information,
an advertisement rates payment step of paying advertisement rates to a user of the first terminal from an advertiser according to the number of times of the accesses counted in the counting step, and
a protection cost payment step of paying, as cultural facility protection cost, at least a part of the advertisement rates to a cultural facility different from the user of the first terminal from the advertisement rates paid to the user of the first terminal in the advertisement rates payment step.

An advertisement method according to a tenth aspect of the present invention is an advertisement method that includes at least a first terminal and a second terminal, and a server which is able to communicate with the first terminal and the second terminal.

The method includes
a facility information display step of displaying public facility information including a 360° VR image on a display unit of the second terminal,
an advertisement information display step of displaying advertisement information on the VR image which is the public facility information displayed on the display unit of the second terminal,
a counting step of counting the number of times the second terminal accesses the server or the advertisement information,
an advertisement rates payment step of paying advertisement rates to a user of the first terminal from an advertiser according to the number of times of the accesses counted in the counting step, and
a protection cost payment step of paying, as facility protection cost, at least a part of the advertisement rates to a public facility different from the user of the first terminal from the advertisement rates paid to the user of the first terminal in the advertisement rates payment step.

An advertisement method according to an eleventh aspect of the present invention is an advertisement method that includes at least a first terminal and a second terminal, and a server which is able to communicate with the first terminal and the second terminal.

The method includes
a facility information display step of displaying transportation facility information including a 360° VR image on a display unit of the second terminal,
an advertisement information display step of displaying advertisement information on the VR image which is the transportation facility information displayed on the display unit of the second terminal,
a counting step of counting the number of times the second terminal accesses the server or the advertisement information,
an advertisement rates payment step of paying advertisement rates to a user of the first terminal from an advertiser according to the number of times of the accesses counted in the counting step, and
a protection cost payment step of paying, as facility protection cost, at least a part of the advertisement rates to a transportation facility different from the user of the first terminal from the advertisement rates paid to the user of the first terminal in the advertisement rates payment step.

The number of times the second terminal accesses the server or advertisement information (such as a website) is counted in the counting step, and the user of the first terminal pays, as the cultural facility protection cost, the public facility protection cost, or the transportation facility protection cost, the advertisement rates to the cultural facility, the public facility, or the transportation facility according to the number of times of the accesses counted.

The user of the first terminal includes not only an actual user of the first terminal but also a person who can be regarded as the user of the first terminal. For example, a third party requested by the user of the first terminal may receive the advertisement rates from the advertiser, and may pay at least a part of the advertisement rates as the facility protection cost to the cultural facility.

For example, since the advertisement information is displayed on the display unit of the terminal together with the cultural facility information, the user of the terminal can obtain the cultural facility information and can also obtain the advertisement information (for example, store information) near the place (area) where the cultural facility is present, there is an advantage that the user can use these information in sightseeing.

For example, since the advertisement information is displayed on the display unit of the terminal together with the cultural facility information, there is an advantage that the advertiser achieves branding of stores and products which are advertisement targets.

The maintenance costs are paid to the cultural facilities such as the zoo and the botanical garden by merely publishing the advertisement, and thus, there is an advantage that the company which is the advertiser fulfills the CSR.

Since at least a part of the advertisement rates obtained from the advertiser is paid to the cultural facility by the user of the first terminal, there is an advantage that advertising revenue can be allocated to the maintenance costs of the cultural facility for the cultural facility such as the zoo and the botanical garden. It is possible to repair the cultural facility with the advertising revenue in the cultural facility, and thus, it is possible to maintain the cultural facility.

At the cultural facilities such as the zoo and the aquarium, feed costs of the animals and fishes are extremely high, and it is also necessary to cover salaries for caretakers. In such cultural facilities, there is an advantage that these costs can be covered by the advertisement rates.

The cultural facilities such as the zoo and the botanical garden can provide new services and reduce admission fees and entrance fees by obtaining the advertisement rates.

The advertisement rate generated when the advertisement information is displayed on the terminal together with the cultural facility information is allocated to the cultural facility maintenance cost, and thus, the user of the terminal can support the maintenance of the cultural facility of a tourist destination by viewing the advertisement displayed on the terminal, and can contribute to society.

The advertisement information is displayed on the terminal together with the cultural facility information, and thus, companies and stores near a place where the cultural facility is present can not only advertise to the user of the terminal, but also allocate the advertisement rate to the cultural facility maintenance cost. Thus, the companies and stores can contribute to the community, contribute to the society, and do CSR activities such as the maintenance of the cultural facility.

For example, at the public facility such as the park, when the public facility is the park, maintenance costs of playground equipment, management costs of lawn and sand pool, cleaning costs of toilets, cleaning costs of a site, maintenance costs of buildings, and salaries for cleaning staffs are required.

Since at least a part of the advertisement rates obtained by the user of the first terminal is paid, as the public facility protection cost, by the user of the first terminal to the public facility, there is an advantage that the advertisement rates are allocated to the public facility protection cost in the public facility.

The public facility such as the park can provide new services or introduce new playground equipment by obtaining the advertisement rates.

The advertisement rates generated when the advertisement information is displayed on the terminal together with the public facility information are allocated to the public facility maintenance cost, and thus, the user of the terminal such as the user can support the maintenance of the public facility by viewing the advertisement displayed on the terminal, and can contribute to society.

The advertisement information is displayed on the terminal together with the public facility information, and thus, companies and stores near a place where the public facility is provided can not only advertise to the user of the terminal such as the user, but also allocate the advertisement rates to the public facility maintenance cost. Thus, the companies and stores can contribute to the community, contribute to the society, and do CSR activities.

For example, at the transportation facilities such as the railway, the bus, and the airport, in the case of the railway such as a municipal subway, costs such as cleaning costs in the station, cleaning costs of toilets in the station, guidance service costs, and salaries for cleaning staffs are required.

Since at least a part of the advertisement rates obtained by the user of the first terminal is paid, as the facility protection cost, by the user of the first terminal to the transportation facility, there is an advantage that the advertisement rates are allocated to the facility protection cost in the transportation facility.

In addition, the obtained advertisement rates can be used for improving hygiene in the transportation facility such as the railway. That is, the transportation facility such as the railway can allocate the advertisement rates to the cleaning of the toilets, and the like.

The advertisement rates generated when the advertisement information is displayed on the terminal together with the railway facility information are allocated to the cost for improving the hygiene of the railway facility, and thus, the user of the terminal can support the improvement of the hygiene of the railway facility by viewing the advertisement displayed on the terminal, and can contribute to society.

The advertisement information is displayed on the terminal together with the transportation facility information, and thus, companies and stores near a place where the transportation facility is present can not only advertise to the user of the terminal, but also allocate the advertisement rates to the cost for the improvement of the hygiene of the transportation facility. Thus, the companies and stores can contribute to the community, contribute to the society, and do CSR activities.

Companies in need of what to do in the community contribution, the society contribution, and the CSR activities receive help from the aforementioned countermeasures.

A large company that needs to set a CSR budget can allocate CSR cost to the advertisement rates by doing the CSR activities by using the present invention. Therefore, such a large company has an advantage that the advertisement rate can be reduced.

The advertisement rates are allocated to the cultural facility maintenance cost, and thus, the cultural facility is protected. Thus, there is an advantage that the local economy is revitalized for the national or local public organization.

An area where the cultural facility such as the zoo or the botanical garden is present is revitalized, and thus, an attention to the local area by company such as the large company is increased. Accordingly, the company such as a large company invests in the area where the cultural facility is present, and thus, there is an effect that the regional economy is revitalized.

It is preferable that the method of the advertisement system according to the present invention include at least any of a map information display step of displaying map information on the display unit of the terminal,
a tourism information display step of displaying tourism information on the display unit of the terminal,
a transportation information display step of displaying transportation information on the display unit of the terminal,
an emergency information display step of displaying emergency information on the display unit of the terminal, and
a guidance information display step of displaying guidance information to a destination on the display unit of the terminal.

With such a configuration, the tourism information, the transportation information, the emergency information, or the guidance information is displayed together with at least any of the cultural facility information, the public facility information, and the transportation facility information on the display unit of the terminal, the user of the terminal easily uses these information.

Specifically, the tourism information near the zoo and the botanical garden where the cultural facility is present is known. The transportation information such as which transportation is used to go to the zoo or the botanical garden at which the cultural facility is present is known. The emergency information such as evacuation information at the time of disaster is known. The guidance information for guiding to the destination is known. The same applies to public facilities and transportation facilities.

Languages displayed on the terminals may be any language such as Japanese, English, Chinese, Korean, French, and German.

### Brief Description of Drawings

FIG. 1 is a schematic diagram of an advertisement system according to an embodiment of the present invention.
FIG. 2 is a schematic diagram of the advertisement system according to the embodiment of the present invention.
FIG. 3 is a schematic diagram of the advertisement system according to the embodiment of the present invention.
FIG. 4 is a conceptual diagram of a terminal of the advertisement system according to the embodiment of the present invention.
FIG. 5 is a conceptual diagram of the terminal of the advertisement system according to the embodiment of the present invention.
FIG. 6 is a schematic diagram of the advertisement system according to the embodiment of the present invention.
FIG. 7 is a flowchart of the advertisement system according to the embodiment of the present invention.
FIG. 8 is a flowchart of the advertisement system according to the embodiment of the present invention.

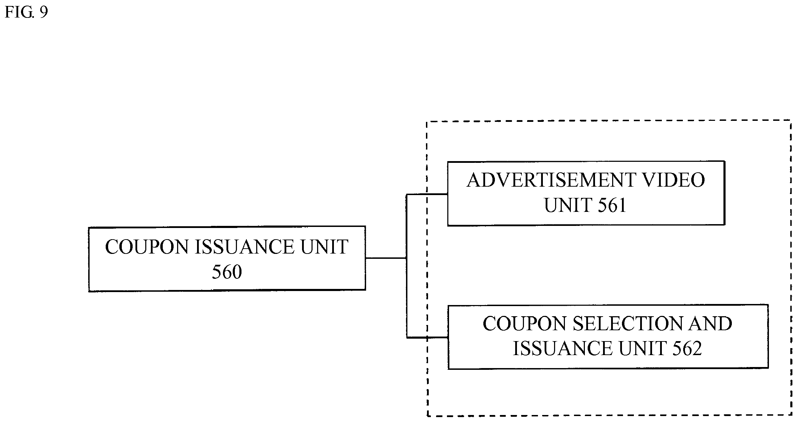

FIG. 9 is a schematic diagram of the advertisement system according to the embodiment of the present invention.

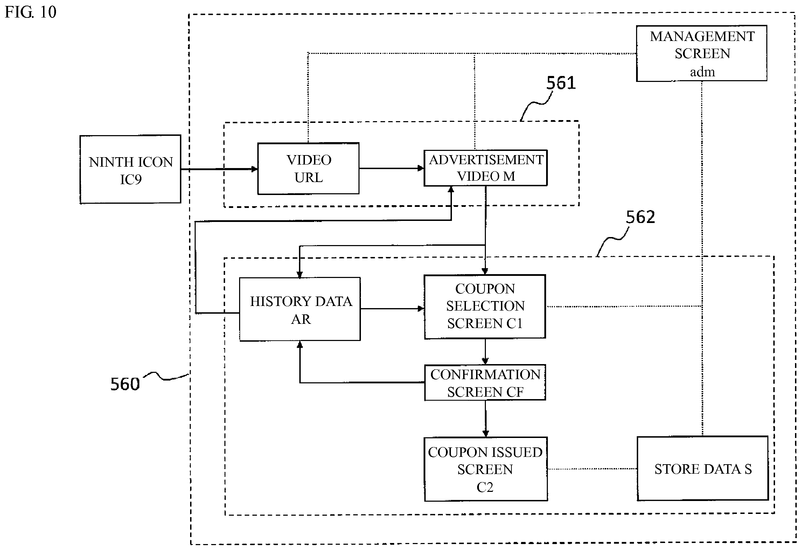

FIG. 10 is a schematic diagram of the advertisement system according to the embodiment of the present invention.

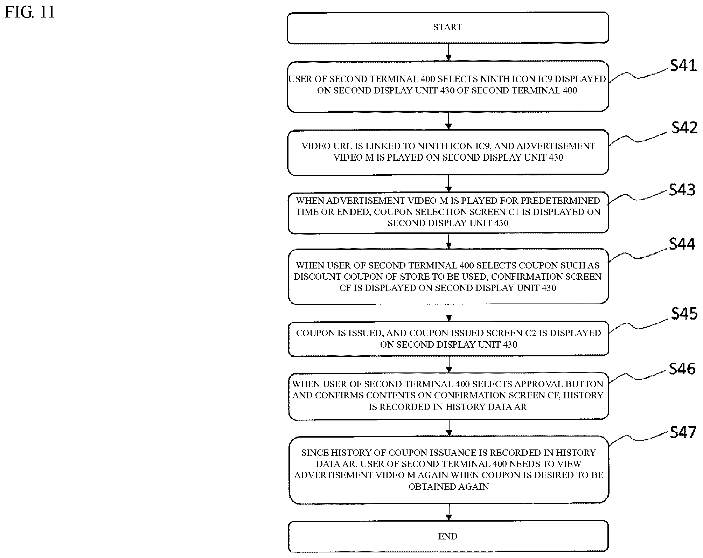

FIG. 11 is a flowchart of the advertisement system according to the embodiment of the present invention.

### Description of Embodiments

Hereinafter, an embodiment of an advertisement system 100 according to the present invention will be described with reference to the drawings.

### <First embodiment>

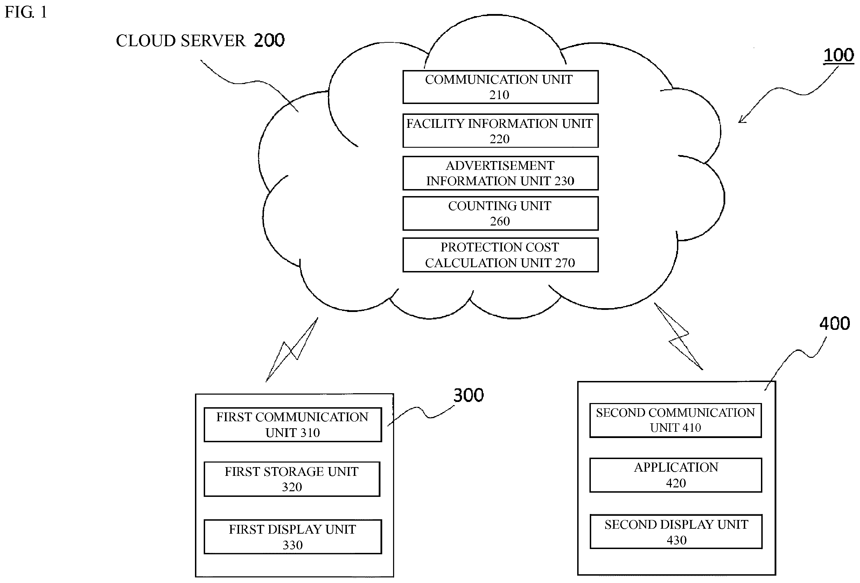

As illustrated in FIG. 1, the advertisement system 100 according to the present embodiment includes a cloud server 200 that is a server,
a first terminal 300 that is a terminal capable of accessing the cloud server 200, and
a second terminal 400 that is a terminal capable of accessing the cloud server 200.

The cloud server 200 is a server established on a cloud, and can use a server function via the Internet. In the present embodiment, the cloud server 200 is used as a server, but a normal server may be used.

The cloud server 200 includes a communication unit 210 to which the first terminal 300 and the second terminal 400 can be connected via the Internet,
a facility information unit 220 that displays cultural facility information, public facility information, or transportation facility information such as a facility-related image CP on a second display unit 430 of the second terminal 400,
an advertisement information unit 230 that displays advertisement information such as an advertisement information image AI on the second display unit 430 of the second terminal 400,
a counting unit 260 that counts the number of times the second terminal 400 accesses, and
a protection cost calculation unit 270 that determines the amount of payment that at least a part of advertisement rates paid by an advertiser is paid as cultural facility protection cost, public facility protection cost, or transportation facility protection cost by the user of the first terminal 300 to the cultural facility different from the user of the first terminal 300 according to the number of times of the accesses counted by the counting unit 260.

The communication unit 210 communicates with the first terminal 300 and the second terminal 400. A communication method may be any of wired and wireless methods. It is preferable that communication between the communication unit 210 and the second terminal 400 be performed in the wireless method such as Wi-Fi, Beacon, or Long Term Evolution (LTE). The first terminal 300 and the second terminal 400 may be provided in plural.

In the present embodiment, the communication unit 210 enables communication between the cloud server 200 and the second terminal 400 of the user via Wi-Fi.

In the present embodiment, a wireless communication device such as Wi-Fi is provided at a site of a cultural facility, a public facility, or a transportation facility according to the user of the first terminal 300 or a request of the user of the first terminal 300. When the wireless communication device such as Wi-Fi is already provided, the wireless communication device such as Wi-Fi may be used.

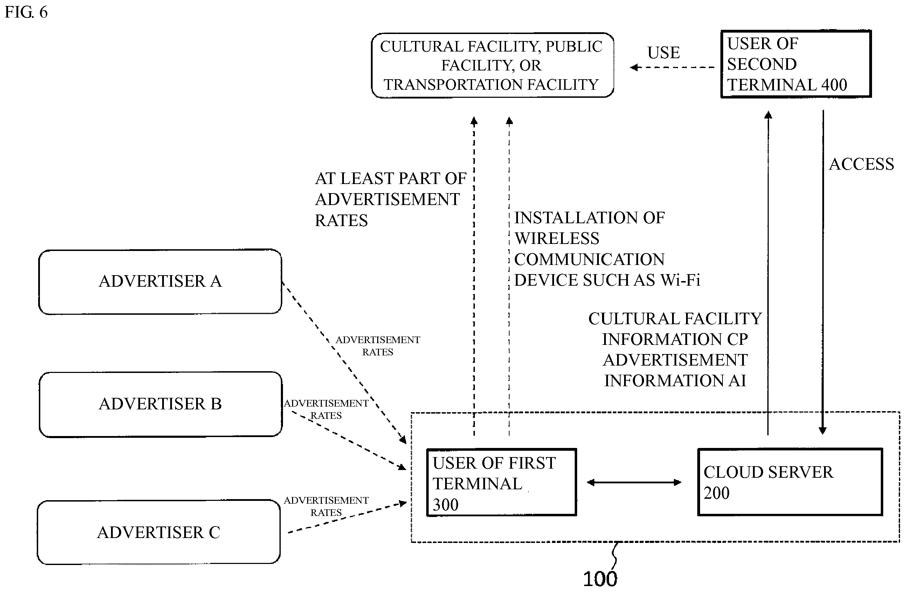

The user of the first terminal 300 may not collect installation cost and communication cost of the wireless communication device such as Wi-Fi provided on the site of the cultural facility, the public facility, or the transportation facility from the user of the second terminal 400 by collecting the advertisement rates from advertisers (advertiser A, advertiser B, and advertiser C in FIG. 6).

The facility information unit 220 displays the facility-related image CP including a 360° VR image on the second display unit 430 of the second terminal 400. That is, the user of the second terminal 400 accesses the cloud server 200 via a second communication unit 410 to be described below, and thus, the cultural facility information, the public facility information, or the transportation facility information such as the facility-related image CP including the 360° VR image is displayed on the second display unit 430 of the second terminal 400.

In the present embodiment, the facility-related image CP is a 360° VR image, and the facility is displayed on the screen of the 360° second terminal 400 (second display unit 430).

In the present embodiment, the facility information unit 220 controls the 360° VR image. That is, the 360° VR image displayed on the second display unit 430 of the second terminal 400 is automatically moving, but the facility information unit 220 controls this movement.

For example, when the second terminal 400 is a smartphone or a tablet computer, the user of the second terminal 400 can operate the display of the 360° VR image by touching the second display unit 430 of the second terminal 400.

When the information to be displayed on the second display unit 430 is the cultural facility information, the facility information unit 220 displays text information such as a description of the cultural facility and a history of the cultural facility on the second display unit 430 of the second terminal 400.

The cultural facility information such as the description and history of the cultural facility may be moved on the second display unit 430 of the second terminal 400 in conjunction with the 360° VR image, and may be fixed on the second display unit 430.

When the information to be displayed on the second display unit 430 is the cultural facility information, information based on contents of the cultural facility and the cultural facility information such as the history are displayed on the second display unit 430 together with the facility-related image CP including the 360° VR image.

The "facility-related image CP" includes, for example, an image of an animal in a zoo, an image of a fish, a penguin, or a whale in an aquarium, and an image of an exhibit in an art gallery or museum.

When the information to be displayed on the second display unit 430 is the cultural facility information, the facility information unit 220 may store a video related to the cultural facility separately from the facility-related image CP, and may display the video on the second display unit 430.

When the information displayed on the second display unit 430 is the public facility information, information based on contents of the public facility is displayed on the second display unit 430 together with the facility-related image CP including the 360° VR image.

For example, when the public facility is a park, the facility information of the park is displayed on the second display unit 430.

For example, in the case of the park, the "facility-related image CP" includes athletic images, playground equipment images, open space images, and images of rivers or ponds.

When the information to be displayed on the second display unit 430 is the public facility information, the facility information unit 220 may store a video related to the public facility separately from the facility-related image CP, and may display the video on the second display unit 430.

When the information displayed on the second display unit 430 is the transportation facility information, information based on contents of the transportation facility is displayed on the second display unit 430 together with the facility-related image CP including the 360° VR image.

For example, when the transportation facility is a station, the facility information of the station is displayed on the second display unit 430.

The "facility-related image CP" includes, for example, an image of a facility such as a store within a station, an image of a platform, and an image of a ticket gate.

When the information to be displayed on the second display unit 430 is the transportation facility information, the facility information unit 220 may store a video related to the transportation facility separately from the facility-related image CP, and may display the video on the second display unit 430.

The advertisement information unit 230 stores the advertisement information such as the advertisement information image AI, and may display the advertisement information such as the advertisement information image AI on the second display unit 430 of the second terminal 400. That is, the user of the second terminal 400 accesses the cloud server 200 via the second communication unit 410 to be described below, and thus, the advertisement information image AI is displayed on the second display unit 430 of the second terminal 400.

In the present embodiment, a first advertisement information image AI1 which is the advertisement information image AI is displayed on the facility-related image CP including the 360° VR image. The advertisement information image AI may be linked to a website of the advertiser.

The first advertisement information image AI1 may be moved on the second display unit 430 of the second terminal 400 in conjunction with the 360° VR image, or may be fixed on the second display unit 430.

For example, when the second terminal 400 is a smartphone or a tablet computer, the user of the second terminal 400 touches (selects) the first advertisement information image AI1 on a display which is the second display unit 430, and thus, the user displays the website of the first advertisement information image AI1.

When the advertisement information image AI is selected, a discount ticket or an event ticket may be displayed. The discount ticket or the event ticket may be displayed as a barcode or a two-dimensional barcode.

The counting unit 260 counts the number of times the second terminal 400 accesses the cloud server 200.

The counting unit 260 may count the number of times the second terminal accesses the advertisement information image AI.

When the advertisement information image AI is linked to the website of the advertiser, the counting unit 260 may count the number of times of the accesses when the terminal accesses the website.

The protection cost calculation unit 270 calculates the advertisement rates according to the number of times of the accesses counted by the counting unit 260.

The advertiser pays the calculated advertisement rates to a request destination of the user of the first terminal 300 or the user of the first terminal 300.

The request destination of the user of the first terminal 300 is a third party different from the cultural facility, the public facility, or the transportation facility. The request destination of the user of the first terminal 300 is, for example, a foundation.

The protection cost calculation unit 270 calculates the cultural facility protection cost, the public facility protection cost, or the transportation facility protection cost based on the calculated advertisement rates.

The calculated cultural facility protection cost, public facility protection cost, or transportation facility protection cost is paid to the cultural facility, the public facility, or the transportation facility from the user of the first terminal 300 or the request destination of the user.

That is, the calculated cultural facility protection cost is paid to the cultural facility from the user of the first terminal 300 or the request destination of the user.

Further, the calculated public facility protection cost is paid to the public facility from the user of the first terminal 300 or the request destination of the user.

The calculated transportation facility protection cost is paid to the transportation facility from the user of the first terminal 300 or the request destination of the user.

In the present embodiment, the user of the first terminal 300 and the cultural facility, the public facility, or the transportation facility are not the same object.

### (First terminal 300)

The first terminal 300 which is a terminal includes
a first communication unit 310 which is communication function for accessing the Internet in order to access the cloud server 200,
a first storage unit 320 that stores at least any of the cultural facility information, the public facility information, and the transportation facility information such as the facility-related image CP to be described below and the advertisement information such as the advertisement information image AI, and
a first display unit 330 that displays the cultural facility information such as the facility-related image CP and the advertisement information such as the advertisement information image AI.

Examples of the first terminal 300 include a personal computer, a smartphone (mobile phone), and a tablet computer.

The first communication unit 310 performs communication for the Internet. The first communication unit 310 allows the first terminal 300 to access the cloud server 200.

The first communication unit 310 accesses the Internet via Wi-Fi (wireless LAN) or wired LAN.

The first storage unit 320 stores at least any of the cultural facility information, the public facility information, and the transportation information such as the facility-related image CP including the 360° VR image to be uploaded to a website stored in the cloud server 200 and the advertisement information such as the advertisement information image AI.

Although an operator of the first terminal 300 stores at least any of the cultural facility information, the public facility information, and the transportation information such as the facility-related image CP including the 360° VR image and the advertisement information such as the advertisement information image AI in the first storage unit 320 of the first terminal 300, the operator may directly upload and store the information to the cloud server 200 and in the cloud server 200 without storing the information in the first storage unit 320.

The first display unit 330 can display at least any of the cultural facility information, the public facility information, and the transportation information such as the facility-related image CP including the 360° VR image to be uploaded to the website and the advertisement information such as the advertisement information image AI.

That is, the operator can confirm the arrangement of the cultural facility information, the public facility information, and the transportation facility information such as the facility-related image CP and the advertisement information such as the advertisement information image AI by a screen displayed on the first display unit 330. The first storage unit 320 may store not only images but also videos. A plurality of images may be used.

In the present embodiment, the facility-related image CP is a VR (Virtual Reality) 360° image. The facility-related image CP may be a video.

### (Second terminal 400)

The second terminal 400 which is a terminal includes
a second communication unit 410 that is a communication function for accessing the Internet,
an application 420 that is an application for accessing the cloud server 200, and
a second display unit 430 that displays an icon (not illustrated) of a second application 410 or at least any of the cultural facility information, the public facility information, and the transportation facility information stored in the cloud server 200, and the advertisement information.

Examples of the second terminal 400 include a smartphone, a laptop computer, and a tablet computer.

The second communication unit 410 performs communication for accessing the Internet. The second communication unit 410 allows the second terminal 400 to access the cloud server 200.

The application 420 is application software for accessing the cloud server 200. The application 420 is downloaded to the second terminal 400, and thus, an icon (not illustrated) of the application 420 is displayed on a screen which is the second display unit 430 of the second terminal 400.

In the present embodiment, the icon (not illustrated) of the application 420 is displayed on the second display unit 430 of the second terminal 400. The user of the second terminal 400 accesses the cloud server 200 via the second communication unit 410 by selecting the icon of the application 420.

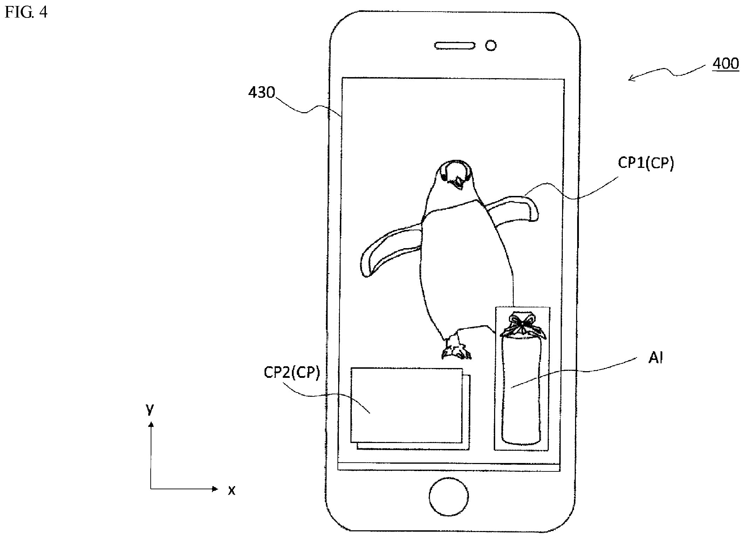

As illustrated in FIG. 4, the second terminal 400 accesses the cloud server 200, and the second display unit 420 displays at least any of the cultural facility information, the public facility information, and the transportation facility information such as the facility-related images CP including the 360° VR image and the advertisement information such as the advertisement information image AI (first advertisement information image AI1).

In FIG. 4, an example of an aquarium is illustrated as the cultural facility, and a penguin is displayed, as the facility-related image CP, on the second display unit 420.

In the present embodiment, the cultural facility information such as where the penguin is in the aquarium, at what time zone a visitor can participate in an event where the visitor can interact with the penguin, how much it costs, and whether there is discount information is displayed.

In FIG. 4, a facility-related image CP1 is displayed on the entire second display unit 420. A facility-related image CP2 which is the facility-related image CP is disposed on an x-axis negative direction side and a y-axis negative direction side of the second display unit 420. The first advertisement information image AI1 which is the advertisement information image AI is disposed on an x-axis positive direction side and a y-axis negative direction side of the second display unit 420.

The facility-related image CP2 is selected, and thus, the facility-related image CP2 is displayed on the entire second display unit 420 in place of the facility-related image CP1. The disposition of the second display unit 420 on the display is not limited to the disposition method illustrated in FIG. 4.

With such a system, the user of the second terminal 400 can know the cultural facility information, the public facility information, or the transportation facility information by activating the application 420, and can receive help for the use of the facility.

The user of the second terminal 400 can know information on nearby shops from the advertisement information (advertisement information image AI) displayed by the second display unit 430.

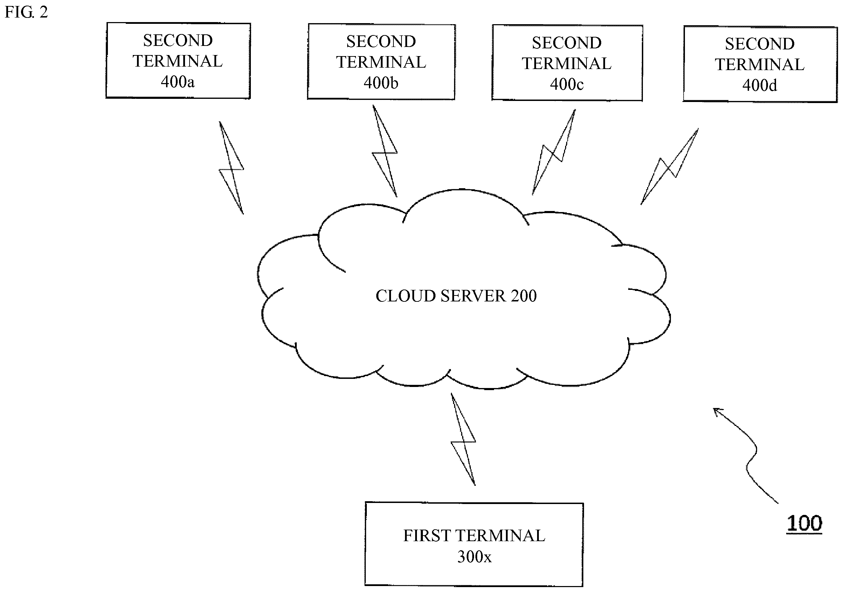

As illustrated in FIG. 2, a plurality of second terminals 400 may be used. In FIG. 2, the plurality of second terminals 400 includes a second terminal 400a, a second terminal 400b, a second terminal 400c, and a second terminal 400d. The number of second terminals 400 is not limited.

That is, one or more second terminals 400 may access to the cloud server 200. A plurality of first terminals 300 may be used.

### <Second embodiment>

In a second embodiment, the same contents as in the first embodiment will be omitted or simplified.

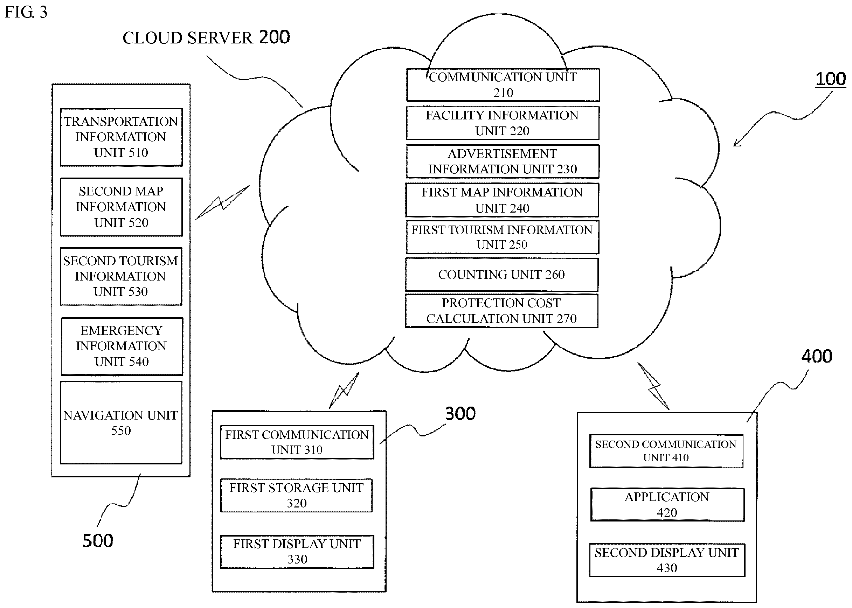

As illustrated in FIG. 3, in the second embodiment, the cloud server 200 which is a server includes
a communication unit 210 to which the first terminal 300 and the second terminal 400 can be connected via the Internet,
a facility information unit 220 that displays at least any of the cultural facility information, the public facility information, and the transportation facility information such as the facility-related image CP including the 360° VR image on the second display unit 430 of the second terminal 400,
an advertisement information unit 230 that displays the advertisement information such as the advertisement information image AI on the second display unit 430 of the second terminal 400,
a first map information unit 240 that displays map information on the second display unit 430 of the second terminal 400,
a first tourism information unit 250 that displays tourism information on the second display unit 430 of the second terminal 400,
a counting unit 260 that counts the number of times the second terminal 400 accesses, and
a protection cost calculation unit 270 that determines the amount of payment that at least a part of the advertisement rates paid by the advertiser is paid as the cultural facility protection cost, the public facility protection cost, or the transportation facility protection cost by the user of the first terminal 300 to the cultural facility, the public facility, or the transportation facility different from the user of the first terminal 300 according to the number of times of the accesses counted by the counting unit 260.

In the present embodiment, a third facility-related image CP3 which is the 360° VR image is displayed, as the facility-related image CP, on the second display unit 430.

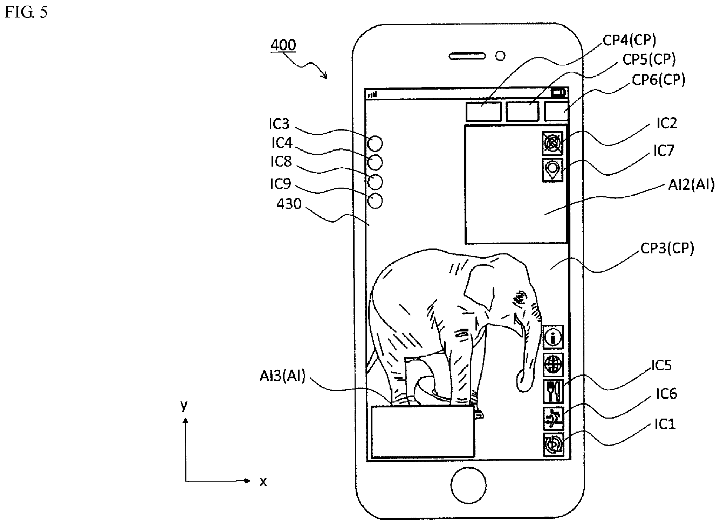

As illustrated in FIG. 5, a fourth facility-related image CP4, a fifth facility-related image CP5, and a sixth facility-related image CP6 are displayed on a y-axis positive direction side above the second display unit 430 of the second terminal 400 of the present embodiment.

The user of the second terminal 400 selects the fourth facility-related image CP4, the fifth facility-related image CP5, or the sixth facility-related image CP6, and thus, the selected facility-related image is displayed on the entire surface of the second display unit 430.

In the present embodiment, the second advertisement information image AI2 and the third advertisement information image AI3 are displayed, as the advertisement information image AI, on the second display unit 430.

The facility information unit 220 and the advertisement information unit 230 are the same as in the first embodiment, and are as described above. In the present embodiment, since Beacon is used, a position of the user of the second terminal 400 is ascertained.

In the present embodiment, a first icon IC1 and a second icon IC2 are displayed on the second display unit 430 of the second terminal 400, and the user of the second terminal 400 can operate the display of the 360° VR image.

The first icon IC1 moves (reproduces) the 360° VR image according to a preset movement, and turns the reproduction on/off.

When the second icon IC2 is selected, the user of the second terminal 400 can manually move the 360° VR image by touching the second display unit 430.

In order for the user of the second terminal 400 to sensuously operate, even though the second icon IC2 is not selected, the user of the second terminal 400 can operate the 360° VR image by touching the second display unit 430.

As illustrated in FIG. 6, the user of the first terminal 300 collects the advertisement rates from the advertisers (advertiser A, advertiser B, and advertiser C in FIG. 6), and pays at least a part of the advertisement rates to the cultural facility, the public facility, or the transportation facility.

A client from the user of the first terminal 300 may be used instead of the user of the first terminal 300. The client is a third party other than the cultural facility, the public facility, or the transportation facility.

The first map information unit 240 stores at least any of map information of a place where the cultural facility such as a zoo or a botanical garden is present, map information of places where a public facility such as a park is present, and transportation facility information such as a station and an airport. The user of the second terminal 400 can display the map information on the second display unit 430 by selecting a third icon IC3 which is a predetermined icon displayed on the second display unit 430.

In the present embodiment, detailed map information which is not displayed on a second map information unit 520 to be described below is displayed on the second display unit 430 by the first map information unit 240. An example is map information within the facility.

The first map information unit 240 may display map information on the web such as Google Maps (a trademark used by Google Inc., and "Google" is a registered trademark of Google Inc.) on the second display unit 430.

The first tourism information unit 250 stores at least any of tourism information near the cultural facility such as the zoo and the botanical garden, tourism information near the public facility such as the park, and tourism information near the transportation facility such as the station and the airport, and various event information in the vicinity of these facilities.

The user of the second terminal 400 can display tourism information, event information, and experience information on the second display unit 430 by selecting a fourth icon IC4 which is a predetermined icon displayed on the second display unit 430.

The advertisement information image AI may be displayed on the second display unit 430 by the advertisement information unit 230 together with the event information or the experience information displayed on the second display unit 430 by the first tourism information unit 250.

The advertisement system 100 according to the second embodiment includes a server 500 different from the cloud server 200.

The server 500 includes
a transportation information unit 510 that displays the transportation information on the second display unit 430,
a second map information unit 520 that displays the map information on the second display unit 430,
a second tourism information unit 530 that displays the tourism information and the event information on the second display unit 430,
an emergency information unit 540 that displays emergency information such as evacuation information on the second display unit 430 in an event of a disaster such as an earthquake,
a navigation unit 550 that displays a route to a destination from the transportation information and the map information, and displays a guidance to the destination on the second display unit 430, and
a coupon unit 560 that issues coupons.

For example, the transportation information unit 510 displays the transportation information such as what kind of transportation is used by the user of the second terminal 400, which railway is used by the user of the second terminal, or which bus is used by the user of the second terminal on the second display unit 430 for the destination such as a zoo or a botanical garden.

The transportation information unit 510 also displays the transportation information such as traffic jam information, accident information, and traffic regulation information when the user uses a vehicle on the second display unit 430. The transportation information unit 510 may display the transportation information on the web on the second display unit 430.

The second map information unit 520 displays, for example, a map from a train or bus station to a destination such as a zoo, a botanical garden, a park, a station, an airport, or a bus stop on the second display unit 430.

Although the second map information unit 520 is provided separately from the first map information unit 240 in the present embodiment, one map information unit may be used, or any one thereof may be used.

The second map information unit 520 may display map information on the web such as Google Maps (a trademark used by Google Inc., and "Google" is a registered trademark of Google Inc.) on the second display unit 430.

The second tourism information unit 530 displays the tourism information on the web on the second display unit 430.

The first tourism information unit 250 or the second tourism information unit 530 includes restaurant information. For example, a fifth icon IC5 which is a predetermined icon displayed on the second display unit 430 is selected, and thus, restaurants near a shrine and a temple at which the second terminal 400 is positioned are displayed on the second display unit 430 of the second terminal 400.

The emergency information unit 540 displays emergency information and evacuation information distributed from the Japan Meteorological Agency or local public organizations on the second display unit 430.

In the present embodiment, since the position of the user of the second terminal 400 is ascertained by Beacon, the emergency information unit 540 displays the emergency information and the evacuation information appropriate for the location on the second display unit 430.

The emergency information and the evacuation information from the emergency information unit 540 may be transmitted to the second terminal 400 by voice.

The navigation unit 550 displays the guidance to the destination on the second display unit 430 based on the transportation information, the map information, and positional information.

Specifically, a sixth icon IC6 which is a predetermined icon displayed on the second display unit 430 of the second terminal 400 is selected, and thus, an evacuation place and an evacuation route are displayed on the second display unit 430 together with the map.

Although not described in the present embodiment, weather information may be displayed on the second display unit 430 of the second terminal 400.

Specifically, a seventh icon IC7 which is a predetermined icon displayed on the second display unit 430 of the second terminal 400 is selected, and thus, positional information of the second terminal 400 is displayed on the second display unit 430.

### (Flowchart of preparation step of advertisement system 100)

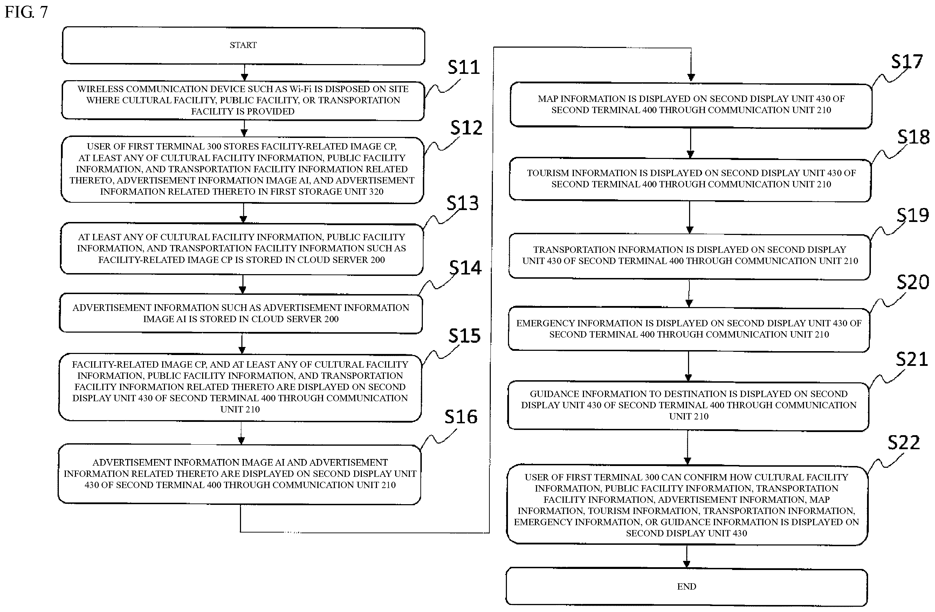

A flowchart illustrating an example of a preparation step of the advertisement system 100 will be described with reference to FIG. 7.

The wireless communication device such as Wi-Fi is disposed on the site where the cultural facility, the public facility, or the transportation facility is present (step S11).

The user of the first terminal 300 stores the facility-related image CP, at least any of the related cultural facility information, the public facility information, and the transportation facility information, the advertisement information image AI, and the advertisement information related thereto in the first storage unit 320 (step S12).

At least any of the cultural facility information, the public facility information, and the transportation facility information such as the facility-related image CP including the 360° VR image is uploaded to the facility information unit 220 of the cloud server 200 via the first communication unit 310 and the communication unit 210. That is, at least any of the cultural facility information, the public facility information, and the transportation facility information such as the facility-related image CP is stored in the cloud server 200 (step S13).

The advertisement information image AI and advertisement information related thereto are uploaded to the advertisement information unit 230 of the cloud server 200 via the first communication unit 310 and the communication unit 210. That is, the advertisement information such as the advertisement information image AI is stored in the cloud server 200 (step S14).

The facility-related image CP, at least any of the cultural facility information, the public facility information, and the transportation facility information related thereto are displayed on the second display unit 430 of the second terminal 400 via the communication unit 210 (step S15, and facility Information display step).

The advertisement information image AI and the advertisement information related thereto are displayed on the second display unit 430 of the second terminal 400 via the communication unit 210 (step S16, and advertisement information display step).

In the present embodiment, the advertisement information image AI is displayed on the 360° VR image on the second display unit 430 of the second terminal 400.

The advertisement information image AI may be moved on the screen of the second display unit 430 together with the 360° VR image, or may be constantly fixed and displayed on the second display unit 430.

The map information is displayed on the second display unit 430 of the second terminal 400 via the communication unit 210 (step S17, and map information display step).

When the third icon IC3 displayed on the second display unit 430 of the second terminal 400 is selected, the map information is displayed on the second display unit 430.

The tourism information is displayed on the second display unit 430 of the second terminal 400 via the communication unit 210 (step S18, and tourism information display step).

When the fourth icon IC4 displayed on the second display unit 430 of the second terminal 400 is selected, the tourism information is displayed on the second display unit 430.

The transportation information is displayed on the second display unit 430 of the second terminal 400 via the communication unit 210 (step S19, and transportation information display step).

When an eighth icon IC8 displayed on the second display unit 430 of the second terminal 400 is selected, the transportation information is displayed on the second display unit 430.

The emergency information is displayed on the second display unit 430 of the second terminal 400 via the communication unit 210 (step S20, and emergency information display step).

In the present embodiment, the emergency information is automatically displayed on the second display unit 430 of the second terminal 400.

The guidance information to the destination is displayed on the second display unit 430 of the second terminal 400 via the communication unit 210 (step S21, and guidance information display step).

When the seventh icon IC7 displayed on the second display unit 430 of the second terminal 400 is selected, the map information and current location information are displayed, and the guidance information is displayed by inputting the destination.

The user of the first terminal 300 can confirm how the cultural facility information, the public facility information, the transportation facility information, the advertisement information, the map information, the tourism information, the transportation information, the emergency information, or the guidance information is displayed on the second display unit 430 (step S22).

When the displayed advertisement information image AI is selected, the specific contents of the advertisement information related to the advertisement information image AI is displayed. The advertisement information image may be linked to another website such as an official website related to the advertisement information.

For example, when the advertisement information image AI is selected and the advertisement information of the advertisement information image AI is store information, the description of the store contents, the access to the store, the service contents at the store, the sales items, and the discount ticket are displayed.

### (Flowchart of utilization mode of advertisement system 100)

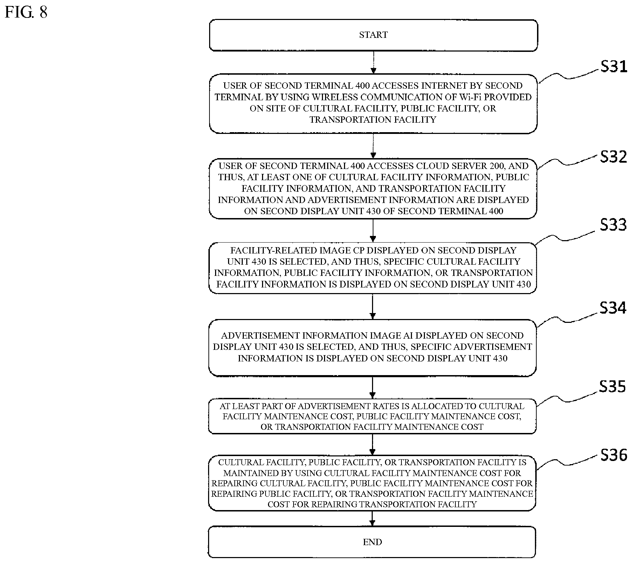

Next, a flowchart illustrating an example of a utilization mode of the advertisement system 100 will be described with reference to FIGS. 6 and 8.

The user of the second terminal 400 accesses the Internet on the second terminal 400 by using wireless communication such as Wi-Fi provided on the site of the cultural facility, the public facility, or the transportation facility (step S31).

The advertisement rates are collected from the advertisers (advertiser A, advertiser B, and advertiser C in FIG. 6) who provide the advertisement information to the advertisement system 100, and thus, the usage fee of the wireless communication such as Wi-Fi used by the user of the terminal 400 can be free by using at least a part of the advertisement rates.

In the present embodiment, the user of the first terminal 300 collects the advertisement rates from the advertisers who provide the advertisement information, and pays at least a part of the advertisement rates to the cultural facility, the public facility, or the transportation facility.

The third party may collect the advertisement rates from the advertisers who provide the advertisement information according to the request of the user of the first terminal 300, and may pay at least a part of the advertisement rates to the cultural facility, the public facility, or the transportation facility.

Accordingly, the cultural facility, the public facility, or the transportation facility can obtain at least a part of the advertisement rates as the cultural facility protection cost, the public facility protection cost, or the transportation facility protection cost without incurring cost risks such as capital investment.

The user of the second terminal 400 accesses the cloud server 200 via the second communication unit 410 and the communication unit 210, and thus, the second display unit 430 of the second terminal 400 can display at least any of the cultural facility, the public facility information, and the transportation facility information such as the facility-related image CP, and the advertisement information such as the advertisement information image AI.

That is, the user of the second terminal 400 accesses the cloud server 200, and thus, at least any of the cultural facility information, the public facility information, and the transportation facility information, and the advertisement information are displayed on the second display unit 430 of the second terminal 400 (step S32).

Accordingly, the user of the second terminal 400 such as a tourist can receive help in sightseeing by using the cultural facility information, the public facility information, or the transportation facility information, and the advertisement information displayed on the second display unit 430.

Since at least a part of the advertisement rates is allocated to the cultural facility protection cost, the public facility protection cost, or the transportation facility protection cost, the user of the second terminal 400 can contribute to society such as the cultural facility protection, the public facility protection, and the transportation facility protection by using the advertisement system 100 according to the present invention.

That is, the user of the first terminal 300 pays, as cultural property protection cost, at least a part of the advertisement rates to the shrine and the temple with cultural properties. However, since this payment is caused by the user of the second terminal 400 such as a tourist who views (accesses to) the advertisement information displayed on the second display unit 430, the user of the second terminal 400 also indirectly contributes to society.

The user of the second terminal 400 can view the facility-related image CP and the description text related thereto on the second display unit 430 by selecting the facility-related image CP displayed on the second display unit 430, and can obtain the cultural facility information, the public facility information, or the transportation facility information.

That is, the facility-related image CP displayed on the second display unit 430 is selected, and thus, the specific cultural facility information, public facility information, or transportation facility information is displayed on the second display unit 430 (step S33).

Accordingly, the user of the second terminal 400 such as a user can receive help for the use of the facility by using the cultural facility information, the public facility information or the transportation facility information, and the advertisement information displayed on the second display unit 430.

Since at least a part of the advertisement rates is allocated to the cultural facility maintenance cost of the zoo, public facility maintenance cost of the park, or transportation facility maintenance cost of the station, the user of the second terminal 400 such as a user can contribute to society such as cultural facility maintenance, public facility maintenance, or transportation facility maintenance by using the advertisement system 100 according to the present invention.

The user of the second terminal 400 can obtain the advertisement information such as the advertisement information image AI, the description text related thereto, the access information, the service contents, and the discount ticket by selecting the advertisement information image AI displayed on the second display unit 430. In particular, the user of the second terminal 400 can obtain information on the vicinity of a place where the cultural facility, the public facility, or the transportation facility is present, and can use the information for the use of the facility.

That is, the advertisement information image AI displayed on the second display unit 430 is selected, and thus, the specific advertisement information is displayed on the second display unit 430 (step S34).

When the advertisement information such as the advertisement information image AI is displayed on the second display unit 430 of the second terminal 400, at least a part of the advertisement rates is paid, as the cultural facility maintenance cost, the public facility maintenance cost, or the transportation facility maintenance cost, to the zoo or the botanical garden which is the cultural facility, or the park which is the public facility, or the station which is the transportation facility.

Specifically, the counting unit 260 of the server 200 counts the number of times the second terminal 400 accesses the server 200 (counting step).

The protection cost calculation unit 270 of the server 200 calculates the facility protection cost to be paid to the cultural facility, the public facility, or the transportation facility according to the counted number (protection cost calculation step).

The advertiser pays the advertisement rates to the user of the first terminal 300 according to the number of times of the accesses to the server 200 or the advertisement (advertisement rates payment step).

The user of the first terminal 300 pays, as the cultural facility protection cost, public facility protection cost or transportation facility protection cost, at least a part of the advertisement rates obtained from the advertiser to the cultural facility, the public facility, or the transportation facility. Specifically, the user of the first terminal 300 pays the cultural facility protection cost, the public facility protection cost, or the transportation facility protection cost calculated by the protection cost calculation unit 270 to the cultural facility, the public facility, or the transportation facility.

That is, at least a part of the advertisement rates is allocated to the cultural facility maintenance cost, the public facility maintenance cost, or the transportation facility maintenance cost (step S35, and facility maintenance cost allocation step).

The cultural facility maintenance cost is used for repairing the cultural facility, the public facility maintenance cost is used for repairing the public facility, and the transportation facility maintenance cost is used for repairing the transportation facility. Accordingly, the cultural facility, the public facility, or the transportation facility are maintained (step S36, and facility maintenance step).

Accordingly, the user of the second terminal 400 such as a user comes to the zoo or the botanical garden which is the cultural facility, a lecture of the public facility, or a station of the transportation facility all the more.

The cultural facility, the public facility, and the transportation facility are maintained, and thus, the user comes to an area where the cultural facility, the public facility, and the transportation facility are present. Accordingly, there is an advantage that regional economy is revitalized for the national or local public organization.

The area where the cultural facility, the public facility, and the transportation facility are present is revitalized, and thus, a company such as a large corporation pays attention to and invests the area where the cultural facility, the public facility, and the transportation facility are present. Accordingly, the regional economy will be further revitalized.

The company that is the advertiser displays the advertisement information together with at least any of the cultural facility information, the public facility information, and the transportation facility information on the second display unit 430 of the second terminal 400, and thus, a store related to the advertisement or brand power of a product is improved.

At least a part of the advertisement rates caused when the advertisement information is displayed on the second display unit 430 of the second terminal 400 together with at least any of the cultural facility information, the public facility information, and the transportation facility information is used for the cultural facility maintenance, the public facility maintenance, or the transportation facility maintenance, and thus, the company that is the advertiser can contribute to the community, contribute to the society, and do CSR activities.

In particular, at least a part of the advertisement rates caused by displaying the advertisement information on the second display unit 430 of the second terminal 400 together with at least any of the cultural facility information, the public facility information, and the transportation facility information is allocated to hygiene cost, particularly, cleaning cost of a toilet, and thus, the company that is the advertiser can appeal to the society such as the community contribution, the society contribution, and the CSR activities.

The large company that needs to set a CSR budget can allocate the cost of the CSR activities to the advertisement rates by using the present invention. Therefore, such a large company has an advantage that the advertisement rate can be reduced.

That is, for example, when the advertisement rate is 10% and the CSR cost is 1% with respect to selling cost and general administrative cost, since the CSR cost is allocated to the advertisement rate by using the present invention, the advertisement rate is 9%.

### (Coupon issuance)

Coupons such as merchandise discount coupons and additional service coupons at stores are issued by a coupon issuance unit 560.

The coupon issuance unit 560 includes an advertisement video unit 561 that uploads and plays an advertisement video M, and
a coupon selection and issuance unit 562 that selects and determines a coupon.

Specifically, a ninth icon IC9 is linked to a video URL of the advertisement video M. Thus, when the user of the second terminal 400 selects the ninth icon IC9, the advertisement video M is displayed and is played on the second display unit 430 of the second terminal 400. That is, the advertisement video unit 561 plays the advertisement video M on the second display unit 430.

When the playing of the advertisement video M for a predetermined time is ended, a coupon selection screen C1 is displayed on the second display unit 430 of the second terminal 400.

That is, the coupon selection and issuance unit 562 displays the coupon selection screen C1 on the second display unit 430.

The user of the second terminal 400 selects the coupon displayed on the coupon selection screen C1, and thus, the second display unit 430 is a coupon issued screen C2 via a confirmation screen CF. That is, the coupon selection and issuance unit 562 issues the coupon.

The coupon is displayed on the coupon issued screen C2. The user of the second terminal 400 can use the coupon by showing a screen on which the coupon is displayed to a clerk of the store.

The coupon may be used by displaying the barcode on the coupon and reading the barcode at the store.

When the user of the second terminal 400 acquires the coupon, that is, when the coupon is displayed on the second display unit 430 of the second terminal 400, a history thereof is recorded in history data AR.

When the history is recorded in the history data AR, the user of the second terminal 400 can acquire the coupon again by viewing the advertisement video M again.

Store data S is linked to the coupon selection screen C1 and the coupon issued screen C2. That is, the coupon is created based on the store information recorded in the store data S.

A management screen adm is a screen that manages the store data S, the video URL, the advertisement video M, the coupon selection screen C1, and the coupon issued screen C2.

### (Flowchart of coupon issuance)

The user of the second terminal 400 selects the ninth icon IC9 displayed on the second display unit 430 of the second terminal 400 (step S41).

The ninth icon IC9 is linked to the video URL, and the advertisement video M is played on the second display unit 430 (step S42, and advertisement video play step).

When the advertisement video M is played for a predetermined time or ended, the coupon selection screen C1 is displayed on the second display unit 430 (step S43, and coupon selection and issuance step).

When the user of the second terminal 400 selects, for example, a coupon such as a discount coupon of a store to be used, the confirmation screen CF is displayed on the second display unit 430 (step S44, and coupon selection and issuance step).

The user of the second terminal 400 confirms contents of the coupon on the confirmation screen CF, and selects an approval button. Accordingly, the coupon is issued. That is, the coupon is issued, and the coupon issued screen C2 is displayed on the second display unit 430 (step S45, and coupon selection and issuance step).

When the user of the second terminal 400 selects the approval button and confirms the contents on the confirmation screen CF, a history thereof is recorded in the history data AR (step S46, and history recording step).

Since the history of the coupon issuance is recorded in the history data AR, the user of the second terminal 400 needs to view the advertisement video M again when the user wants to acquire the coupon again (step S47).

The present invention can be implemented even in a mode in which various improvements, modifications, or variations are made without departing from the spirit of the present invention.

### Industrial Applicability

According to the present invention, it is possible to provide an advertisement system, an advertisement system program, and an advertisement method that display advertisement information in association with cultural facility information, public facility information, or transportation facility information.

According to the present invention, it is possible to provide an advertisement system that generates cleaning cost and maintenance cost. Therefore, the present invention has industrial applicability.

### Reference Signs List

- 100: advertisement system
- 200: cloud server (server)
- 210: communication unit
- 220: facility information unit
- 230: advertisement information unit
- 240: first map information unit (map information unit)
- 250: first tourism information unit (tourism information unit)
- 260: counting unit
- 270: protection cost calculation unit
- 300: first terminal (terminal)
- 310: first communication unit
- 320: first storage unit
- 330: first display unit (display unit)
- 400: second terminal (terminal)
- 410: second communication unit
- 420: application
- 430: second display unit (display unit)
- 500: server
- 510: transportation information unit
- 520: second map information unit (map information unit)
- 530: second tourism information unit (tourism information unit)
- 540: emergency information unit
- 550: navigation unit

## Claims

1. An advertisement system that includes at least a first terminal and a second terminal which are terminals, and a server which is able to communicate with the first terminal and the second terminal, wherein
the server includes
a communication unit that is able to communicate with the first terminal and the second terminal,
a facility information unit that displays cultural facility information including a 360° VR image on a display unit of the second terminal,
an advertisement information unit that displays advertisement information on the display unit of the second terminal,
a counting unit that counts the number of times the second terminal accesses the server or the advertisement information, and
a protection cost calculation unit that calculates the amount of payment that at least a part of advertisement rates paid by an advertiser is paid as protection cost of a cultural facility by a user of the first terminal to a cultural facility different from the user of the first terminal according to the number of times of the accesses counted by the counting unit, and
the advertisement information is displayed on the VR image which is the cultural facility information displayed on the display unit of the second terminal through the communication unit.

2. An advertisement system that includes at least a first terminal and a second terminal which are terminals, and a server which is able to communicate with the first terminal and the second terminal, wherein
the server includes
a communication unit that is able to communicate with the first terminal and the second terminal,
a facility information unit that displays public facility information including a 360° VR image on a display unit of the second terminal,
an advertisement information unit that displays advertisement information on the display unit of the second terminal,
a counting unit that counts the number of times the second terminal accesses the server or the advertisement information, and
a protection cost calculation unit that calculates the amount of payment that at least a part of advertisement rates paid by an advertiser is paid as protection cost of a public facility by a user of the first terminal to a public facility different from the user of the first terminal according to the number of times of the accesses counted by the counting unit, and
the advertisement information is displayed on the VR image which is the public facility information displayed on the display unit of the second terminal through the communication unit.

3. An advertisement system that includes at least a first terminal and a second terminal which are terminals, and a server which is able to communicate with the first terminal and the second terminal, wherein
the server includes
a communication unit that is able to communicate with the first terminal and the second terminal,
a facility information unit that displays transportation facility information including a 360° VR image on a display unit of the second terminal,
an advertisement information unit that displays advertisement information on the display unit of the second terminal,
a counting unit that counts the number of times the second terminal accesses the server or the advertisement information, and
a protection cost calculation unit that calculates the amount of payment that at least a part of advertisement rates paid by an advertiser is paid as protection cost of a transportation facility by a user of the first terminal to a transportation facility different from the user of the first terminal according to the number of times of the accesses counted by the counting unit, and
the advertisement information is displayed on the VR image which is the transportation facility information displayed on the display unit of the second terminal through the communication unit.

4. The advertisement system according to claim 1, 2, or 3, wherein the protection cost calculation unit calculates advertisement rates according to the number of times of the accesses counted by the counting unit, and calculates the amount of payment to be paid as the protection cost based on the advertisement rates.

5. The advertisement system according to claims 1 to 4, further comprising:
a coupon issuance unit that issues a coupon capable of being used in a registered store on the display unit of the second terminal through the communication unit, wherein
the coupon issuance unit includes
an advertisement video unit that plays an advertisement video on the display unit of the second terminal, and
a coupon selection and issuance unit that displays a coupon selection screen on the display unit of the second terminal after the advertisement video is played for a predetermined time or ended, and
the coupon is displayed on the display unit of the second display by selecting the coupon from the coupon selection screen displayed by the coupon selection and issuance unit.

6. A program of an advertisement system that includes at least a first terminal and a second terminal which are terminals, and a server which is able to communicate with the first terminal and the second terminal, wherein
the server performs
a communication process of being able to communicate with the first terminal and the second terminal,
a facility information display process of displaying cultural facility information including a 360° VR image on a display unit of the second terminal,
an advertisement information display process of displaying advertisement information on the display unit of the second terminal,
a counting process of counting the number of times the second terminal accesses the server or the advertisement information, and
a protection cost calculation process of calculating the amount of payment that at least a part of advertisement rates paid by an advertiser is paid as protection cost of a cultural facility by a user of the first terminal to a cultural facility different from the user of the first terminal according to the number of times of the accesses counted by the counting process, and
the advertisement information is displayed on the VR image which is the cultural facility information displayed on the display unit of the second terminal through the communication process.

7. A program of an advertisement system that includes at least a first terminal and a second terminal which are terminals, and a server which is able to communicate with the first terminal and the second terminal, wherein
the server performs
a communication process of being able to communicate with the first terminal and the second terminal,
a facility information display process of displaying public facility information including a 360° VR image on a display unit of the second terminal,
an advertisement information display process of displaying advertisement information on the display unit of the second terminal,
a counting process of counting the number of times the second terminal accesses the server or the advertisement information, and
a protection cost calculation process of calculating the amount of payment that at least a part of advertisement rates paid by an advertiser is paid as protection cost of a public facility by a user of the first terminal to a public facility different from the user of the first terminal according to the number of times of the accesses counted by the counting process, and
the advertisement information is displayed on the VR image which is the public facility information displayed on the display unit of the second terminal through the communication process.

8. A program of an advertisement system that includes at least a first terminal and a second terminal which are terminals, and a server which is able to communicate with the first terminal and the second terminal, wherein
the server performs
a communication process of being able to communicate with the first terminal and the second terminal,
a facility information display process of displaying transportation facility information including a 360° VR image on a display unit of the second terminal,
an advertisement information display process of displaying advertisement information on the display unit of the second terminal,
a counting process of counting the number of times the second terminal accesses the server or the advertisement information, and
a protection cost calculation process of calculating the amount of payment that at least a part of advertisement rates paid by an advertiser is paid as protection cost of a transportation facility by a user of the first terminal to a transportation facility different from the user of the first terminal according to the number of times of the accesses counted by the counting process, and
the advertisement information is displayed on the VR image which is the transportation facility information displayed on the display unit of the second terminal through the communication process.

9. An advertisement method that includes at least a first terminal and a second terminal which are terminals, and a server which is able to communicate with the first terminal and the second terminal, the method comprising:
a facility information display step of displaying cultural facility information including a 360° VR image on a display unit of the second terminal;
an advertisement information display step of displaying advertisement information on the VR image which is the cultural facility information displayed on the display unit of the second terminal;
a counting step of counting the number of times the second terminal accesses the server or the advertisement information;
an advertisement rates payment step of paying advertisement rates to a user of the first terminal from an advertiser according to the number of times of the accesses counted in the counting step; and
a protection cost payment step of paying, as cultural facility protection cost, at least a part of the advertisement rates to a cultural facility different from the user of the first terminal from the advertisement rates paid to the user of the first terminal in the advertisement rates payment step.

10. An advertisement method that includes at least a first terminal and a second terminal which are terminals, and a server which is able to communicate with the first terminal and the second terminal, the method comprising:
a facility information display step of displaying public facility information including a 360° VR image on a display unit of the second terminal;
an advertisement information display step of displaying advertisement information on the VR image which is the public facility information displayed on the display unit of the second terminal;
a counting step of counting the number of times the second terminal accesses the server or the advertisement information;
an advertisement rates payment step of paying advertisement rates to a user of the first terminal from an advertiser according to the number of times of the accesses counted in the counting step; and
a protection cost payment step of paying, as facility protection cost, at least a part of the advertisement rates to a public facility different from the user of the first terminal from the advertisement rates paid to the user of the first terminal in the advertisement rates payment step.

11. An advertisement method that includes at least a first terminal and a second terminal which are terminals, and a server which is able to communicate with the first terminal and the second terminal, the method comprising:
a facility information display step of displaying transportation facility information including a 360° VR image on a display unit of the second terminal;
an advertisement information display step of displaying advertisement information on the VR image which is the transportation facility information displayed on the display unit of the second terminal;
a counting step of counting the number of times the second terminal accesses the server or the advertisement information;
an advertisement rates payment step of paying advertisement rates to a user of the first terminal from an advertiser according to the number of times of the accesses counted in the counting step; and
a protection cost payment step of paying, as facility protection cost, at least a part of the advertisement rates to a transportation facility different from the user of the first terminal from the advertisement rates paid to the user of the first terminal in the advertisement rates payment step.
